# EUROPEAN PATENT SPECIFICATION

(11) **EP 3 945 957 B1**
(45) Date of publication and mention of the grant of the patent: **03.01.2024**
(21) Application number: 20707090.5
(22) Date of filing: 25.02.2020
(51) Int. Cl.: A47J 31/18, A47J 31/52

(54) **A TURKISH COFFEE BREWING DETECTION METHOD**
VERFAHREN ZUR ERKENNUNG DES BRÜHENS VON TÜRKISCHEM KAFFEE
PROCÉDÉ DE DÉTECTION D'INFUSION DE CAFÉ TURC

(30) Priority: 28.03.2019 TR 201904637
(43) Date of publication of application: 09.02.2022
(73) Proprietor: Arçelik Anonim Sirketi, 34445 Istanbul (TR)
(72) Inventor: SINIRLIOGLU, Sercan, 34950 ISTANBUL (TR); SEZER, Canberk, 34950 ISTANBUL (TR); YUZER, Ozan, 34950 ISTANBUL (TR); DONERKAYALI, Arda, 34950 ISTANBUL (TR); ERGUN, Ali, 34950 ISTANBUL (TR)
(86) International application number: PCT/EP2020/054875
(87) International publication number: WO 2020/193040

(56) References cited:
- WO-A1-2007/071567
- WO-A2-2011/002421

## Description

The present invention relates to a Turkish coffee brewing detection method.

In many Turkish coffee machines, various sensors are used to detect the completion of the coffee brewing process, and the system generally ends the brewing process as said sensors detect that the coffee rises for a certain amount. The coffee machine producers use sensors which make measurements with different technologies in order to detect the completion of the coffee brewing process. While infrared sensors are used in some Turkish coffee machines, other low-cost coffee machines use NTC sensors which measure the temperature of the coffee. Moreover, ultrasonic sensors are also used for measuring the coffee level. All these sensors are affected by factors such as dirt, vapor and condensation during the brewing of the coffee, which adversely affects the coffee quality especially when the coffee is brewed with a little amount of coffee with the distance between the sensor and the coffee surface being maximum.

In the state of the art European Patent Application No. EP1763311, it is disclosed that an infrared sensor is used for detecting the completion of the coffee brewing process.

In the state of the art European Patent Application No. EP3039997, it is disclosed that a temperature sensor is used for detecting the completion of the coffee brewing process.

In the state of the art International Patent Application No. WO2017222487, it is disclosed that a movement sensor is used for detecting the completion of the coffee brewing process.

In the state of the art International Patent Application No. WO2017082841, it is disclosed that a conductive probe is used for detecting the completion of the coffee brewing process. WO2007071567 discloses a Turkish coffee brewing detection method which is suitable to be used in a coffee machine having an induction heater and is executed by a control unit, comprising the steps of transmitting power to the induction heater, and monitoring the power being transmitted to the brewing chamber.

The aim of the present invention is the realization of a Turkish coffee brewing detection method wherein the coffee brewing process is performed in the same manner under any condition with low cost.

The coffee machine comprises a control unit which drives the induction heater brewing the coffee, which monitors the power transmitted to the brewing chamber wherein the coffee is brewed by the induction heater, which cuts off the power being transmitted to the induction heater when the power starts to increase after decreasing to the minimum level and then decides that the brewing process is completed. The power drawn by the brewing chamber from the induction heater changes depending on the physical changes occurring during the brewing of the coffee. With the experiments carried out, the producer has found that the relation of the physical changes of the coffee in the brewing chamber to the brewing of the coffee can be used to decide on the completion of the brewing process. The control unit monitors the power being transmitted to the brewing chamber and detects the completion of the brewing process and ends the brewing process, thus ensuring that the brewed coffee has the same consistency every time.

The Turkish coffee brewing detection method of the present invention is suitable for use in a coffee machine having an induction heater and comprises the steps of monitoring the power being transmitted to the brewing chamber wherein the coffee is brewed after the brewing process starts and deciding on the completion of the brewing process as the power starts to increase after decreasing and then cutting off the power being transmitted to the induction heater.

By means of the coffee machine using only the induction heater in the Turkish coffee brewing process, the completion of the brewing process can be detected, and the need for using sensors for the detection process is eliminated.

The coffee machine comprises a body; a brewing chamber which is produced from ferromagnetic material, which is placed onto the body and wherein the brewing process is performed; an induction heater which heats the brewing chamber; and a control unit which drives the induction heater. The user puts the brewing chamber at its designated place on the body and then presses the start button to start the brewing process. Water is transferred from the water reservoir into the brewing chamber, and the control unit drives the induction heater to heat the brewing chamber.

The coffee machine comprises the control unit which monitors the power being transmitted to the brewing chamber and which decides on the completion of the brewing process when the power starts to increase after decreasing. During the brewing of Turkish coffee, as the water heats up, the coffee starts to dissolve in the water, and a foam of coffee is formed on the water. As a result of numerous experiments, the producer has found that the electrical resistance generated by the coffee-water mixture in the brewing chamber changes during the brewing of the coffee and this causes the amount of power drawn by the brewing chamber from the induction heater to change. The change in the amount of power drawn by the brewing chamber means that although the control unit tries to drive the induction heater at a certain frequency, that is, tries to transmit power at a constant value, the electrical resistance changes, which changes the resonance frequency generated by the induction heater, the brewing chamber and its contents, and thus causing the amount of power coupled from the induction heater to the brewing chamber to change.

As the brewing process starts, the brewing chamber starts to draw a certain amount of power, and as the coffee starts to be brewed, the electrical resistance starts to decrease, which in turn decreases the power drawn. Meanwhile, the coffee-water mixture is completely blended, and the coffee starts to dissolve, in other words starts to release its aroma into the water. With the dissolution of the coffee, the electrical resistance reaches to the minimum level and the power drawn by the brewing chamber also reaches the minimum level. Afterwards, the foam is quickly formed and the electrical resistance starts to increase, which in turn increases the power drawn. After the foam is formed, the brewing process must be ended and the power must be cut off. Otherwise, the coffee starts to boil and loses its foam, which makes the taste of the coffee bitter.

The control unit constantly monitors the power transmitted to the brewing chamber from the start of the brewing process. The power can be monitored by means of a transformer positioned on the coil in the induction circuit or by means of other techniques used in induction heating cookers. The control unit cuts off the power as soon as the power transmitted to the brewing chamber starts to increase after decreasing to the minimum level, and thus the coffee is brewed at the desired consistency.

The Turkish coffee brewing detection method of the present invention is suitable to be used in a coffee machine having an induction heater and is executed by the control unit, comprising the steps of
- transmitting power to the induction heater,
- monitoring the power being transmitted to the brewing chamber, and
- deciding on the completion of the brewing process as the power starts to increase after decreasing and then cutting off the power being transmitted to the induction heater.

In the brewing detection method, the power being transferred to the brewing chamber is constantly monitored and the decision on the completion of the brewing process is made when the power being transmitted starts to increase after decreasing.

In the coffee machine of the present invention, the decision on the completion of the brewing process is made without using any sensor and more precisely and accurately than the other solutions without sensors, thus making it possible to produce a low-cost coffee machine.

## Claims

1. A Turkish coffee brewing detection method which is suitable to be used in a coffee machine having an induction heater and is executed by the control unit, comprising the steps of
- transmitting power to the induction heater,
- monitoring the power being transmitted to the brewing chamber, and
- deciding on the completion of the brewing process as the power starts to increase after decreasing and then cutting off the power being transmitted to the induction heater.

## Patentansprüche

1. Ein Verfahren zur Erkennung des Aufbrühens von türkischem Kaffee, das zur Verwendung in einer Kaffeemaschine mit einer Induktionsheizung geeignet ist und von der Steuereinheit ausgeführt wird, umfasst die Schritte
- Übertragung von Strom an die Induktionsheizung,
- Überwachen der an die Brühkammer übertragenen Leistung und
- die Entscheidung über den Abschluss des Brühvorgangs, wenn die Leistung nach dem Absinken zu steigen beginnt, und dann die Unterbrechung der Stromübertragung zum Induktionsheizgerät.

## Revendications

1. Une méthode de détection de l'infusion du café turc qui peut être utilisée dans une machine à café dotée d'un chauffage à induction et qui est exécutée par l'unité de commande, comprenant les étapes suivantes
- la transmission de l'énergie à l'appareil de chauffage par induction,
- la surveillance de la puissance transmise à la chambre de brassage, et
- en décidant à la fin du processus de brassage que la puissance commence à augmenter après avoir diminué puis coupé la puissance transmise à l'appareil de chauffage par induction.
